# NEW EUROPEAN PATENT SPECIFICATION

(11) **EP 0 066 407 B2**
(45) Date of publication and mention of the opposition decision: **24.03.1993**
(45) Mention of the grant of the patent: 26.06.1985
(21) Application number: 82302528.3
(22) Date of filing: 18.05.1982
(51) Int. Cl.: F04B 37/10, B60T 13/46, F04B 39/12

(54) **Reciprocating exhauster**
Hin- und hergehende Pumpe für Unterdruckerzeugung
Pompe à dépression à mouvement alternatif

(30) Priority: 20.05.1981 GB 8115548
(43) Date of publication of application: 08.12.1982
(73) Proprietor: WABCO AUTOMOTIVE U.K. LIMITED, Rugby, Warwickshire, CV21 2NL (GB)
(72) Inventor: Thistleton, John S., Lowthorpe Southrey Lincoln (GB)
(74) Representative: Chettle, Adrian John

(56) References cited:
- DE-C- 281 977
- DE-U- 7 920 188
- GB-A- 169 201
- GB-A- 841 275
- GB-A- 2 003 990
- GB-A- 2 040 361
- "Hydrostatics and Mechanics" by AEE McKenzie 1934, Edition of 1953, pp. 71, 72
- Bouché/Wintterlin, Springer Verlag 1960, pp. 128 - 132
- "Mechanical Engineers Reference Book", Ed. A Parrish, Butterworth, 1973, F.G. White, pp. 17-8 to 17-22
- The vacuum pumps of Otto von Guericke (1602-1686) and of John Smeaton (1724-1792)

## Description

This invention relates to a reciprocating exhauster of the kind used to provide vacuum to operate a vehicle braking servo predominantly on vehicles driven by diesel engines.

Such exhausters are known which are operated by an engine-driven cam acting on the piston or push rod. Normally, an inlet valve, which may be a reed- type or disc-type valve, is fitted in the connection between the vacuum reservoir and the cylinder and an exhaust valve in communication with the clearance volume (i.e. cylinder volume at top dead centre) is fitted in the cylinder casing. The performance of such exhausters depends to a considerable extent upon the size of the clearance volume which is critically affected by component tolerances.

British Patent Specification No. 2,003,990A discloses a vacuum pump or exhauster which is driven by the engine cam shaft and includes a reciprocable pump member operable to withdraw air from an inlet and expel it to atmosphere. The pump member which may be a diaphragm or a piston divides the cylinder body into an inlet chamber and an outlet chamber, the body and the pump member being so shaped as to minimise the clearance volume of the inlet chamber which is the primary pumping chamber. Air passes through a check valve in a flow path through the pump member, to the exhaust chamber, which has a relatively large minimum volume, intended to increase the pump efficiency while at the same time reducing the noise attributable to gas discharge from the primary pump chamber.

GB-A-2 040 361Adiscloses a pump for fitment to an engine crankcase into which exhaust ports discharge directly. In this pump, when large airflows are required, for example for initial stages of evacuation, the two pumping chambers operate in parallel; while when a higher degree of evacuation is required, the mode of operation changes over, with the two chambers then operating in series. The change over is governed by the characteristics of the springs acting on the various valve closure members.

According to the present invention, we propose a reciprocating exhauster for mounting on the engine casing of a motor vehicle to be driven by the engine and comprising a pump member working in a cylinder body so as to define on opposite sides thereof an inlet chamber having an inlet for connection to a vacuum reservoir and an exhaust chamber having an outlet fitted with an exhaust valve on the side of the exhaust chamber remote from the pump member and a valve arranged to permit fluid to flow from the inlet chamber to the exhaust chamber, the pump member being driven is one direction by a push rod against the action of a return spring disposed in one of the chambers of the cylinder body which spring drives the pump member in the return direction, the push rod passing through the other chamber without the spring and the pump member and the cylinder body being so shaped that the clearance volume of said chamber whithout the spring is minimised and said chamber constitute the main pumping chamber wereas the chamberwith the sping comprises a large clearance volume chamber, characterised in that the main pumping chamber is the exhaust chamber the exhaust value and the side of the exhaust chamber remote from the pump member are adapted for direct discharges into the interior of the engine casing, and the valve arranged to permit fluid flow from the inlet chamber to the exhaust chamber is a flap valve.

In the preferred embodiment, as in conventional reciprocating exhausters, the pump member, usually a piston, is driven by a cam acting directly on the push rod (the piston rod) the return spring disposed in the inlet chamber also serving to bias the push rod into contact with the cam. Preferably, the inlet to the inlet chamber is fitted with a non-return valve which serves to increase the efficiency of the exhauster. If, however, no non-return valve is fitted the inlet chamber effectively provides additional vacuum reservoir capacity. Further, the invention enables a simpler and cheaper construction due, in part, to the relative ease with which component tolerances can be controlled, than is possible with conventional piston exhausters and in which different strokes can be accommodated with minimal component changes.

The present invention, therefore, differs from the exhauster disclosed in British Patent Specification 2,003,990 in that the flow through the two chambers of different clearance volumes is in the opposite direction. That is: the air first enters the chamber with high clearance volume and not as in GB-A-2,003,990, the low clearance volume chamber. The exhaust chamber is the main pumping chamber.

In the preferred embodiment the exhaust port is positioned on the piston or push rod side of the exhaust chamber, this having an advantage in that the exhaust air can be discharged directly into the engine crankcase on which the exhauster is mounted, so avoiding the problem of noise generated by the exhaust valve, and the inlet is conveniently located away from the mounting flange. Also, this arrangement enables the exhauster according to the present invention to be more compact than conventional exhausters and facilitates the admission to the pumping chamber of oil from the crankcase for sealing and lubrication. The oil is then returned to the crankcase with the exhaust air. In a piston exhauster arranged as described in British Patent No. 2,003,990 oil entering the pump chamber would be discharged into the atmosphere unless an additional pipe is connected between the exhaust port and the crankcase.

Embodiments of the invention will now be described by way of example with reference to the accompanying drawings of which:
Figure 1 is a cross-section of a piston exhauster;
Figure 2 is a cross-section of the piston of the exhauster shown in Figure 1;
Figure 3 is a cross-section of the exhaust valve of the exhauster shown in Figure 1;
Figure 4 is a cross-section of a piston exhauster similar to that shown in Figure 1 but having a non-return valve fitted in the inlet port; and
Figure 5 is a cross-section of another piston exhauster similar, in principle, to the exhauster shown in Figure 4.

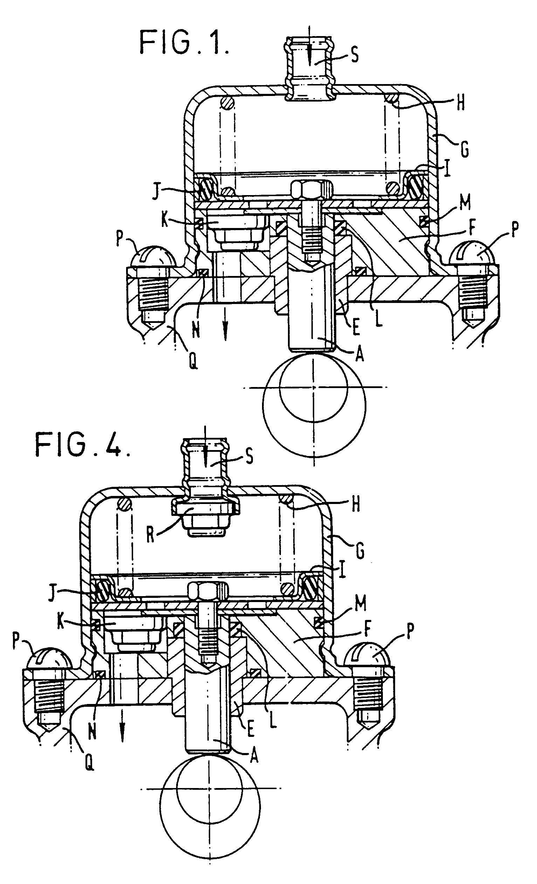

With reference to Figures 1 to 3; the piston exhauster is bolted onto the engine crankcase Q through which passes a piston push rod A, within a bearing E and in engagement with an engine driven cam. The piston rod is sealed by a low-friction ring seal L.

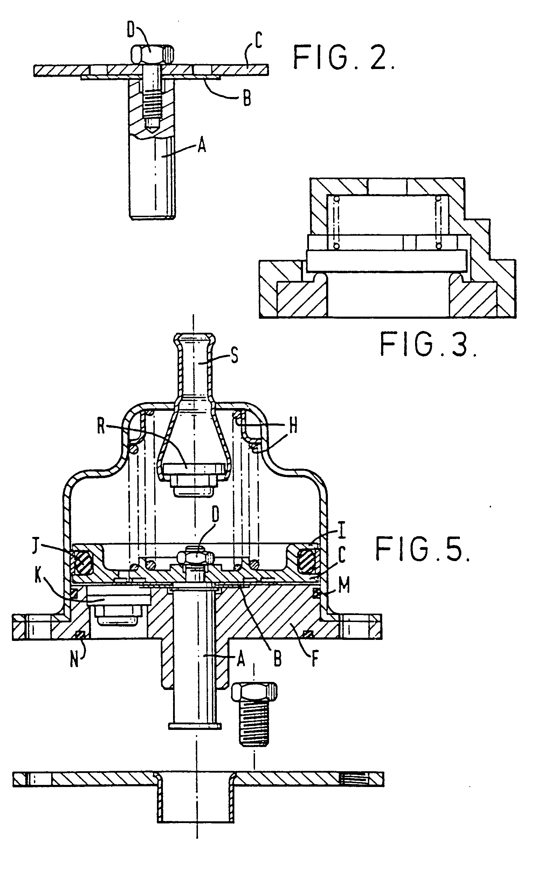

Within the cylinder body G of the exhauster, which is a cup-like pressing, is a piston C bolted to the piston rod A and carrying a low-friction piston ring seal J held by a floating retainer I upon which a return spring H acts directly so clamping the seal J. Above the piston C is a high clearance volume inlet chamber in direct communication with a vacuum reservoir (not shown) via a pipe S and the space created between the piston C and the base block F as the piston works within the cylinder G moving away from the position (equivalent to top-dead centre) illustrated, is a low clearance volume exhaust chamber communicating with the interior of the crankcase Q via an exhaust valve K which may be a disc-type check or non-return valve, such as shown in Figure 3, let into a recess in the base block F.

The pressing G is secured to the block F by crimping, accurate machining of the pressing G therefore being unnecessary since, provided the block F is accurately machined, the block F serves to size the cylinder bore during assembly to provide a good piston seal. Static O-ring seals M and N are fitted between the pressing G and the external diameter of the block F, and between the block F and the engine crankcase Q, respectively.

As shown more clearly in Figure 2, a flap valve B is clamped between the piston C and piston rod A so as to cover four equally angularly spaced holes passing through the piston. In the position (top-dead centre of the exhaust stage) shown in Figure 1, the valve B is received within a recess in the block F so minimising the clearance volume of the exhaust chamber.

In operation, as the cam turns, the piston rod A and piston and seal assembly (B, C, D, I and J) are displaced upwardly against the action of the return spring H, thus creating a partial vacuum on the lower side of the piston (i.e. in the exhaust chamber). The flap-valve B opens to admit airfrom the inlet chamber (in communication with the vacuum reservoir), to the exhaust chamber. As the cam continues to rotate, the piston is driven downwardly by the return spring H to exhaust air in the exhaust chamber through the check valve K directly into the engine crankcase.

The performance of exhausters in general, and the above-described exhauster in particular, is affected by the size of the clearance volume in the main pumping chamber, in this case the exhaust chamber, and this is critically affected by component tolerances particularly where the piston stroke is small. In the embodiment illustrated in Figures 1 to 3, the tolerances on the thickness of block F and the length of the piston rod A control the closest approach of the piston C to the block F and hence the clearance volume. Both of the components Aand Fare designed so that the relevant dimensions can be cheaply controlled in production.

With the crankcase mounting shown in Figure 1 (i.e. using bolts P into the engine flange) the block F may be allowed to protrude slightly from the cylinder body pressing G so that when mounting the exhauster the bolts P draw the cylinder body pressing to the crankcase flange ensuring that the block F is in contact with the flange.

In the piston exhauster shown in Figure 4, a disc-type or non-return valve R is fitted in the pipe S connected to the vacuum reservoir. We believe, that this arrangement yields an increase in efficiency but equally important, it serves to prevent oil passing into the vacuum reservoir.

Figure 5 shows another embodiment of piston exhauster which is similar in principle to the exhauster of Figure 4, but in which the bearing E is replaced by a bore in the block F, and the seal L is omitted. Also, the piston is of a one piece construction and the flap valve B which covers two annular grooves in the face of the piston has a supporting washer.

## Claims

1. A reciprocating exhauster for mounting on the engine casing of a motor vehicle to be driven by the engine and comprising a pump member (C) working in a cylinder body (G) so as to define on opposite sides thereof an inlet chamber having an inlet (S) for connection to a vacuum reservoir and an exhaust chamber having an outlet fitted with an exhaust valve (K) on the side of the exhaust chamber remote from the pump member, and a valve (B) arranged to permit fluid to flow from the inlet chamber to the exhaust chamber, the pump member (C) being driven in one direction by a push rod (A) against the action of a return spring (H) disposed in one of the chambers of the cylinder body, which spring (H) drives the pump member (C) in the return direction, the push rod (A) passing through the other chamber without the spring, and the pump member (C) and the cylinder body (G) being so shaped that the clearance volume of said chamber without the spring is minimised and said chamber constitutes the main pumping chamber whereas the chamber with the spring comprises a large clearance volume chamber, characterised in that the main pumping chamber is the exhaust chamber, the exhaust valve (K) and the side of the exhaust chamber remote from the pump member are adapted for direct discharge into the interior of the engine casing, and the valve (B) arranged to permit fluid flow from the inlet chamber to the exhaust chamber is a flap valve.

2. An exhauster according to claim 1 wherein the inlet (S) is fitted with a non-return valve (R).

## Patentansprüche

1. Hin- und hergehende Pumpe für Unterdrückerzeugung, die zum Anbau an ein Motorgehäuse und zum Antrieb durch den Motor bestimmt ist, mit einem in einem Zylinderkörper (G) arbeitenden Pumpglied (C), um auf dessen gegenüberliegenden Seiten eine einen den Anschluß an einen Unterdrückraum ermöglichenden Einlaß (S) aufweisende Einlaßkammer und eine einen mit einem auf deren vom Pumpglied entfernten Seite angeordneten Auslaßventil (K) vorgesehenen Auslaß aufweisenden Auslaßkammer zu begrenzen, und mit einem das Überströmen einer Flüssigkeitvon der Einlaßkammer zur Auslaßkammer gestattenden Ventil (B), wobei das Pumpglied (C) in einer Richtung von einem Stößel (A) gegen die Kraft einer in einer der Kammer des Zylinderkörpers angeordneten Rückholfeder (H) angetrieben ist, die das Pumpglied (C) in der Rückholrichtung antreibt, wobei der Stößel (A) durch die andere keine Rückholfeder aufweisenden Kammer durchdringt, und wobei das Pumpglied (C) und der Zylinderkörper (G) so geformt sind, daß der Freiraum dieser Kammer ohne die Feder auf ein Minimum reduziert wird, und diese Kammer die Hauptpumpkammer bildet, während die die Feder aufweisende Kammer aus einer Kammer mit grossem Freiraum besteht, dadurch gekennzeichnet, daß die Hauptpumpkammer die Auslaßkammer ist; daß das Auslassventil (K) und die vom Pumpglied entfernte Seite der Auslaßkammer zur direkten Ausströmung ins Innere des Motorgehäuses geeignet sind; und daß das Ventil (B), das derart angeordnet ist, daß Fluessigkeit von der Einlaßkammer zur Auslaßkammer strömen kann, ein Klappenventil ist.

2. Pumpe nach Anspruch 1, dadurch gekennzeichnet, daß der Einlaß (S) mit einem Rückschlagventil (R) versehen ist.

## Revendications

1. Pompe à dépression à mouvement alternatif destinée à être montée sur un carter de moteur afin d'être entrainée par le moteur et comprenant un élément de pompe (C) travaillant dans un corps cylindrique de manière à définir sur ses côtés opposés une chambre d'admission ayant un orifice d'admission (S) pour le raccordement à un réservoir à vide, et une chambre de refoulement ayant sur sa côté qui est éloignée de l'élément de pompe un orifice de sortie équipé d'une soupape de refoulement (K), et comprenant une soupape (B) aménagée de façon à permettre au fluide de s'écouler à partir de la chambre d'admission jusqu'à la chambre de refoulement, l'élément de pompe (C) étant poussé dans une direction par un tige (A) contre un ressort de rappel (H) disposé dans une des chambres du corps cylindrique, lequel ressort (H) pousse l'élément de pompe (C) dans la direction de rappel, la tige (A) se prolongeant à travers l'autre chambre sans le ressort, et l'élément de pompe (C) et le corps cylindrique (G) étant conformés pour minimiser le volume de garde de la dite chambre sans le ressort, et ladite chambre constitue la chambre principale de pompage tandis que la chambre avec le ressort comprend une chambre de volume de garde important, caractérisé en ce que la chambre principale de pompage est la chambre de refoulement, en ce que la soupape de refoulement (K) et le côté de la chambre de refoulement éloigné de l'élément de pompe sont aménagés pour l'évacuation directe dans l'intérieure du carter de moteur, et en ce que la soupape (B) aménagée pour permettre au fluide de s'écouler à partir de la chambre d'admission jusqu'à la chambre de refoulement est une soupape à clapet.

2. Pompe à dépression selon la revendication 1, dans laquelle l'orifice d'admission (S) est équipé d'une soupape anti-retour (R).
